# EUROPÄISCHE PATENTANMELDUNG

(11) **EP 2 574 865 A1**
(43) Veröffentlichungstag der Anmeldung: **03.04.2013**
(21) Anmeldenummer: 11183274.7
(22) Anmeldetag: 29.09.2011
(51) Int. Cl.: F25B 9/06, F01K 3/00, F02C 6/14, F02C 1/02, F02C 1/10, F22B 1/28, F01K 27/02

(54) **Energiespeichervorrichtung sowie Verfahren zur Speicherung von Energie**

(71) Anmelder: Siemens Aktiengesellschaft, 80333 München (DE)
(72) Erfinder: Brunhuber, Christian, 91275 Auerbach (DE); Graeber, Carsten, 91056 Erlangen (DE); Zimmermann, Gerhard, 91315 Höchstadt/Aisch (DE)

(57) **Zusammenfassung**

Die Erfindung betrifft eine Energiespeichervorrichtung (1) zur Speicherung thermischer Energie, mit einem Ladekreislauf (2) für ein Arbeitsgas (3), umfassend einen Verdichter (4), einen Wärmespeicher (5) und eine Expansionsturbine (6), wobei der Verdichter (4) austrittsseitig mit dem Eintritt der Expansionsturbine (6) über eine erste Leistung (7) für das Arbeitsgas (3) verbunden ist, und der Wärmespeicher (5) in die erste Leitung (7) geschaltet ist. Erfindungsgemäß ist der Verdichter (4) und die Expansionsturbine (6) auf einer gemeinsamen Welle (14) angeordnet, und der Wärmetauscher des Wärmespeichers (5) derart ausgelegt, dass das in der Expansionsturbine (6) entspannte Arbeitsgas (3) weitgehend den thermodynamischen Zustandsgrößen des Arbeitsgases (3) vor Eintritt in den Verdichter (4) entspricht. Dabei wird nur ein Teil der Wärmeenergie auf den Wärmespeicher (5) übertragen. Das der Expansionsturbine (6) zugeführte Arbeitsgas (3) bleibe relativ warm.

## Beschreibung

Die Notwendigkeit zur Speicherung von Energie ergibt sich insbesondere aus dem stetig anwachsenden Anteil an Kraftwerksanlage aus dem Sektor der erneuerbaren Energien. Ziel der Energiespeicherung ist es dabei, die Kraftwerke mit erneuerbaren Energien derart in den Stromübertragungsnetzen nutzbar zu machen, dass auf erneuerbar erzeugte Energie auch zeitversetzt zugegriffen werden kann, um so fossile Energieträger und somit CO₂ Emissionen einzusparen.

Die US 2010/0257862 A1 beschreibt ein Prinzip einer bekannten Energiespeichervorrichtung, bei der eine Kolbenmaschine zum Einsatz kommt. Gemäß der US 5,436,508 ist es überdies bekannt, dass durch Energiespeichervorrichtungen zur Speicherung thermischer Energie auch Überkapazitäten bei der Nutzung von Windenergie zur Herstellung elektrischen Stroms zwischengespeichert werden können.

Derartige Energiespeicher wandeln beim Laden des Speichers elektrische Energie in thermische Energie um und speichern die thermische Energie. Beim Entladen wird die thermische Energie wieder in elektrische Energie umgesetzt.

Aufgrund der Zeitspanne die ein Energiespeicher zu überbrücken hat, also die Zeit, über die Energie in bzw. aus dem Energiespeicher ein- und ausgespeichert wird, und der Leistung die es zu speichern gilt, sind an die Dimensionen thermische Energiespeicher entsprechend hohe Anforderungen gestellt. Schon allein aufgrund der Baugröße können thermische Energiespeicher daher sehr teuer in der Anschaffung werden. Ist der Energiespeicher dazu aufwendig gestaltet, oder das eigentliche Wärmespeichermedium teuer in der Anschaffung oder aufwendig im Betrieb, können die Anschaffungs- und Betriebskosten für einen thermischen Energiespeicher schnell die Wirtschaftlichkeit der Energiespeicherung in Frage stellen.

Damit sich die Herstellkosten für den Energiespeicher rechnen, wird kostengünstiges Speichermaterial, insbesondere poröse Materialien, aber auch Sand, Kies, Gestein, Beton, Wasser, Salzlösung etc. bevorzugt. Auch der Wärmetauscher sollte möglichst kostengünstig dimensioniert werden. Aufgrund der oft geringen Wärmeleitfähigkeit der kostengünstigen Speichermaterialien sind jedoch oft die Wärmetauscherflächen sehr groß auszulegen. Die große Anzahl und Länge der Wärmetauscherrohre lassen dabei die Kosten des Wärmetauschers stark ansteigen, welche selbst durch ein kostengünstiges Speichermaterial nicht mehr kompensiert werden können.

Bisher wurden Wärmetauscher auf Basis kostengünstiger Materialien hauptsächlich in Form eines direkten Austauschs des Wärmeträgers, wie beispielsweise Luft, und des Speichermaterials, wie beispielsweise Sand oder Gestein, ausgestaltet um große Wärmetauscher zu ersetzen. Die in der Technik prinzipiell bekannte Wirbelschichttechnik wurde bisher nicht in einer Größenordnung angewandt, die für eine saisonale Speicherung von erneuerbaren Überschussenergie erforderlich wären. Ein direkter Wärmeaustausch bringt zudem einen relativ komplizierten Umgang mit dem Feststoff mit sich, was für einen Großspeicher nicht wirtschaftlich ist.

Als Wärmeträgermedium kommt ein Arbeitsgas, wie beispielsweise Luft, zum Einsatz. Das Arbeitsgas kann dabei wahlweise in einem geschlossenen oder einem offenen Ladekreislauf oder Zusatzkreislauf geführt werden.

Ein offener Kreislauf verwendet als Arbeitsgas immer Umgebungsluft. Diese wird aus der Umgebung angesaugt und am Ende des Prozesses auch wieder in diese entlassen, so dass die Umgebung den offenen Kreislauf schließt. Ein geschlossener Kreislauf erlaubt auch die Verwendung eines anderen Arbeitsgases als Umgebungsluft. Dieses Arbeitsgas wird in dem geschlossenen Kreislauf geführt. Da eine Entspannung in die Umgebung bei gleichzeitiger Einstellung des Umgebungsdruckes und der Umgebungstemperatur entfällt, muss das Arbeitsgas im Falle eines geschlossenen Kreislaufes durch einen Wärmetauscher geführt werden, der eine Abgabe von Wärme des Arbeitsgases an die Umgebung erlaubt. Da in einem geschlossenen Kreislauf auch entfeuchtete Luft oder andere Arbeitsgase verwendet werden können, kann auf eine mehrstufige Ausgestaltung des Verdichters und einen Wasserabscheider verzichtet werden. Nachteilig ist hier jedoch der zusätzliche Kostenaufwand für die Anschaffung und den Betrieb eines zusätzlichen Wärmetauschers nach der Expansionsturbine, bzw. vor dem Verdichter, um das Arbeitsgas auf Arbeitstemperatur für den Verdichter zu erwärmen. Im Betrieb ist dadurch die Energiespeichervorrichtung im Wirkungsgrad geschmälert.

Alternativ kann vorgesehen werden, dass der Ladekreislauf für die Speicherung der thermischen Energie in dem Wärmespeicher als offener Kreislauf ausgebildet ist, und der Verdichter aus zwei Stufen aufgebaut ist, wobei zwischen den Stufen ein Wasserabscheider für das Arbeitsgas vorgesehen ist. Hierbei wird dem Umstand Rechnung getragen, dass in der Umgebungsluft Luftfeuchtigkeit enthalten ist. Durch eine Entspannung des Arbeitsgases in einer einzigen Stufe kann es dazu kommen, dass die Luftfeuchtigkeit aufgrund der starken Abkühlung des Arbeitsgases auf beispielsweise -100°C kondensiert und hierbei die Expansionsturbine beschädigt. Insbesondere können Turbinenschaufeln durch Vereisung nachhaltig beschädigt werden. Eine Entspannung des Arbeitsgases in zwei Schritten ermöglicht es jedoch, kondensiertes Wasser in einem Wasserabscheider hinter der ersten Stufe beispielsweise bei 5°C abzuscheiden, so dass dieses bei einer weiteren Abkühlung des Arbeitsgases in der zweiten Turbinenstufe bereits entfeuchtet ist und eine Eisbildung verhindert oder zumindest verringert werden kann. Nachteilig ist jedoch auch hier der erhöhte Kostenaufwand für die Anschaffung eines mehrstufigen Verdichters und eines Wasserabscheiders. Auch ist im Betrieb eine derartige Anlage im Wirkungsgrad geschmälert.

Aufgabe der Erfindfindung ist es eine kostengünstige Energiespeichervorrichtung zur Speicherung thermischer Energie auf Basis von kostengünstigen Speichermaterialen anzugeben, die einen verbesserten Wirkungsgrad aufweist. Dabei gilt es insbesondere die Nachteile aus dem Stand der Technik zu vermeiden. Aufgabe der Erfindung ist zudem ein Verfahren anzugeben, durch welches sich unter einem verbesserten Wirkungsgrad thermische Energie in kostengünstigen Speichermaterialen speichern lässt.

Gelöst wird die auf eine Vorrichtung gerichtete Aufgabe der Erfindung durch die Merkmale des Anspruchs 1. Demnach umfasst eine Energiespeichervorrichtung zur Speicherung thermischer Energie, mit einem Ladekreislauf für ein Arbeitsgas, einen Verdichter, einen Wärmespeicher und eine Expansionsturbine, wobei der Verdichter austrittsseitig mit dem Eintritt der Expansionsturbine über eine erste Leistung für das Arbeitsgas verbunden ist, und der Wärmespeicher in die erste Leitung geschaltet ist. Erfindungsgemäß sind nun der Verdichter und die Expansionsturbine auf einer gemeinsamen Welle angeordnet, und der Wärmetauscher des Wärmespeichers ist derart ausgelegt, dass das in der Expansionsturbine entspannte Arbeitsgas weitgehend den thermodynamischen Zustandsgrößen des Arbeitsgases vor Eintritt in den Verdichter entspricht. Als thermodynamische Zustandsgrößen werden dabei insbesondre Druck und Temperatur des Arbeitsgases verstanden.

Die Erfindung geht dabei von der Überlegung aus, dass das Arbeitsgas im Wärmetauscher des Wärmespeichers nur ein Teil seiner Wärme abgibt, und somit das Arbeitsgas bei Eintritt in die Expansionsturbine noch relativ warm ist. Dadurch wird vermieden, dass die Temperatur des entspannten Arbeitsgases durch die Expansion in der Expansionsturbine sehr tief sinken kann. Das Arbeitsgas wird also in dem Wärmespeicher nicht komplett abgekühlt. In der Konsequenz bedeutet dies, dass der Wärmespeicher nur noch einen Teil der zur Verfügung stehenden thermischen Energie aufnehmen muss, nämlich insbesondere die hohen Temperaturen.

Die Erfindung macht sich nun zu Nutze, dass, obwohl nur noch ein Teil der verfügbaren thermischen Energie gespeichert wird, sich die Gesamtbilanz der Energiespeicherung zugunsten eines erhöhten Wirkungsgrads verschiebt. Dies erklärt sich einerseits dadurch, dass auf eine Vorrichtung zum Anwärmen, Zwischenerhitzen oder Entwässern der Expansionsluft verzichtet werden kann, die sich sonst negativ auf den Wirkungsgrad auswirken. Durch die Expansion auf Umgebungsdruck und - Temperatur ist somit das Problem der Kondensation von Wasser, selbst bei Verwendung von feuchter Ansaugluft für den Verdichter vorteilhaft vermieden. Somit können bei dem erfindungsgemäßen Verfahren keine Schäden durch gefrorenes Kondensat entstehen. Auch auf einen Kondensator kann verzichtet werden.

Die Expansionsturbine verringert zudem den Energieaufwand für die Verdichtung, indem sie auf der gleichen Welle wie der Verdichter angeordnet ist, und den Verdichter wesentlich mit unterstützt.

Da die Abkühlung des Arbeitsgases bei niedrigen Temperaturen sehr große Wärmetauscherflächen erfordert, kann durch den Verzicht auf Verwertung der niedrigeren Temperaturen auch der Wärmespeicher günstiger ausfallen, da der Wärmetauscher kleiner dimensioniert werden kann.

In Summe wird durch die erfindungsgemäße Maßnahme eine erhebliche Steigerung des Wirkungsgrades der Energiespeicherung erzielt. Zudem ist die erfindungsgemäße Energiespeichervorrichtung wesentlich günstiger in der Anschaffung, als eine herkömmliche Energiespeichervorrichtung, bei der das Arbeitsgas weitgehend vollständig im Wärmetauscher abgekühlt wird.

Bei einer vorteilhaften Weiterentwicklung der Erfindung ist eine zweite Leitung für das Arbeitsgas vorgesehen, über die der Austritt der Expansionsturbine mit dem Eintritt des Verdichters miteinander verbunden ist. Durch die Rückführung des Arbeitsgases, welches in der Expansionsturbine entspannt wird, zurück in den Verdichter, wird so ein geschlossener Kreislauf für das Arbeitsgas gebildet. Ein geschlossener Kreislauf des Arbeitsmediums ermöglicht zusätzlich eine kostengünstigere Auslegung, z.B. durch die Verwendung eines Inertgases mit größerer Wärmeleitfähigkeit (wie beispielsweise Helium) oder durch die Vermeidung von Kondensation (beispielsweise durch die Verwendung trockener Luft). Wird das Arbeitsgas nun erfindungsgemäß nicht komplett im Wärmetauscher abgekühlt, befindet es sich nach der Expansion in der Expansionsturbine in etwa auf dem thermodynamischen Niveau des Arbeitsgases am Eintritt des Verdichters. Dadurch kann auf einen zusätzlichen Wärmetauscher verzichtet werden, der sonst das Arbeitsgas für die Verwendung im Verdichter anwärmen müsste.

Das Ausspeichern der gespeicherten Energie kann zum Beispiel über einen Dampfkreislauf erfolgen.

Die auf ein Verfahren gerichtete Aufgabe der Erfindung wird gelöst durch die Merkmale nach Anspruch 6. Beansprucht wird ein Verfahren zur Speicherung thermischer Energie mit einem Ladevorgang. In dem Ladevorgang wird in einem Verdichterprozess ein Arbeitsgas von einer Temperatur T1 und einem Druck P1 auf einen Druck P2 mit einer Temperatur T2 verdichtet. In einem dem Verdichterprozess folgenden Wärmetauscherprozess wird Wärme auf einen Wärmespeicher übertragen, wodurch Temperatur und Druck des Arbeitsgases auf eine Temperatur T3 und einen Druck P3 verringert werden. In einem dem Wärmetauscherprozess folgenden Expansionsprozess wird das Arbeitsgas auf einen Druck P4 mit einer Temperatur T4 entspannt, wobei Temperatur T3 und Druck P3 so eingestellt werden, dass die Temperatur T4 und der Druck P4 nach dem Expansionsprozess weitgehend der Temperatur T1 und dem Druck P1 vor dem Verdichterprozess entsprechen.

Somit ist es möglich, dass das Arbeitsgas nach dem Expansionsprozess wieder dem Verdichterprozess zugeführt werden kann. Durch die Rückführung wird ein Kreislauf gebildet. In dem Kreislauf kann ein Inertgas verwendet werden. Die Temperatur T3 und der Druck P3 werden dabei vorzugsweise durch die Dimensionierung des Wärmetauscherprozesses, und dabei insbesondere durch die Größe der Wärmetauscherfläche, eingestellt. Da das Arbeitsgas nur noch einen Teil seiner Wärmeenergie über den Wärmetauscher an den Wärmespeicher abgeben muss, lässt sich die Größe der Wärmetauscherfläche wesentlich verringern. Dadurch kann erheblich an Kosten für die Anschaffung des Wärmespeichers gespart werden.

Vorzugsweise wird die im Expansionsprozess freiwerdende Expansionsenergie auf den Verdichterprozess übertragen. Somit leistet die Energie, die nicht in Form von Wärme auf den Wärmespeicher übertragen wurde, noch einen merklichen Beitrag zur Verdichtung des Arbeitsgases.

Die thermische Energie kann saisonal anfallende Überschussenergie eines Kraftwerks mit erneuerbaren Energien sein. Als Speichermaterial für den Wärmespeicher des Wärmetauscherprozesses eignen sich besonders poröse Materialien, Sand, Kies, Gestein, Beton, Wasser oder Salzlösung.

Im Folgenden wird die Erfindung anhand von Figuren näher erläutert. Darin zeigt
- FIG 1: Eine Energiespeichervorrichtung mit einem Lade- und einem Endladekreislauf
- FIG 2: Eine Weiterentwicklung der Energiespeichervorrichtung aus FIG 1
- FIG 3: Ein Verfahren zur Speicherung thermischer Energie
- FIG 4: Eine Weiterentwicklung des Verfahrens aus FIG 3

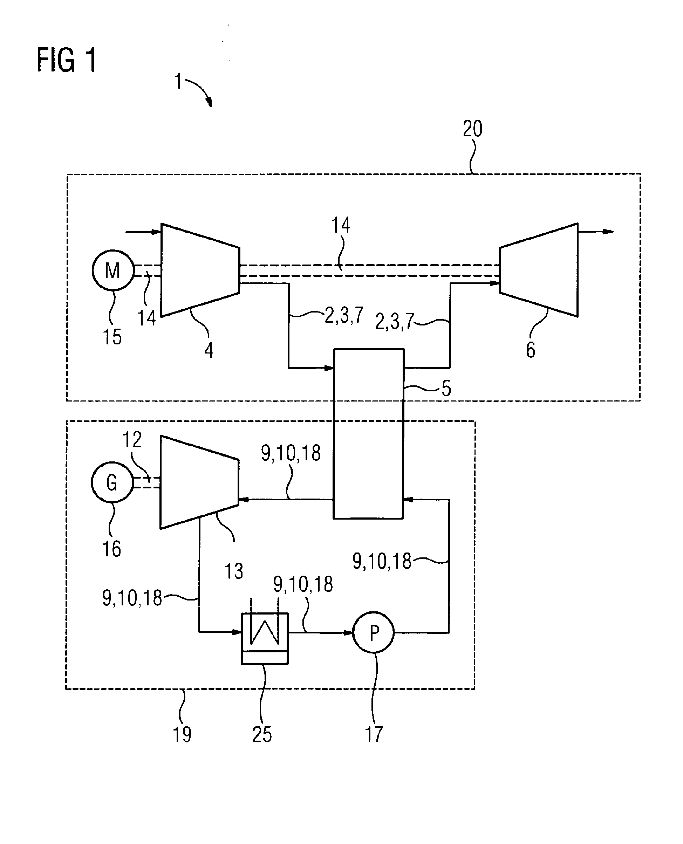

FIG 1 zeigt eine Energiespeichervorrichtung 1 mit einem Ladekreislauf 2 und einem Endladekreislauf 9. Der Ladekreislauf 2 ist Bestandteil des Ladevorgangs 20. Der Ladekreislauf 2 umfasst im Wesentlichen eine erste Leitung 7, die einen Verdichter 4, mit einem Wärmespeicher 5 und einer Expansionsturbine 6 verbindet. Der Verdichter 4 und die Expansionsturbine sind hier schematisch dargestellt, und stehen für alle möglichen Konzepte, wie beispielsweise auch eine mehrstufige Ausführung mit Zwischenkühlung oder -Erhitzung.

Der Verdichter 4 ist mit der Expansionsturbine 6 auf einer gemeinsamen Welle 14 angeordnet. Die Welle 14 wird zudem von einem Elektromotor 15 angetrieben.

Der Wärmespeicher 5 ist hier ebenfalls nur Schematisch dargestellt. Der Wärmespeicher besteht im Wesentlichen aus einem Wärmetauscher zum Einspeichern von thermischer Energie, einem Wärmetauscher zur Ausspeicherung thermischer Energie und dem eigentlichen Speichermaterial. Der gemäß der Erfindung verwendete Wärmespeicher beinhaltet ein kostengünstiges Speichermaterial wie poröse Materialien, Sand, Kies, Gestein, Beton, Wasser oder Salzlösung. Der Wärmespeicher kann zudem mehrschichtig sein, um Bereich zur Speicherung von hohen Temperaturen, und Bereiche zur Speicherung niedriger Temperaturen zu bilden.

Der Endladekreislauf 9 ist Bestandteil des Endladevorgangs 19. Der Endladekreislauf 9 umfasst im Wesentlichen den Wärmespeicher 5, der über eine Dampfleitung 18 für ein zweites Arbeitsgas 10 mit einer Dampfturbine 13 verbunden ist, wobei die Dampfturbine 13 auf einer gemeinsamen zweiten Welle 12 mit einem Generator 16 verbunden ist. Die Dampfleitung 18 ist dabei als offener Kreislauf ausgestaltet. Dabei wird Dampf als zweites Arbeitsgas 10 aus der Dampfturbine 13 ausgekoppelt, und über einen optionalen Wärmetauscher 25 und eine Pumpe 17 dem Wärmetauscher des Wärmespeichers 5 zur Ausspeicherung von Wärmeenergie zugeführt.

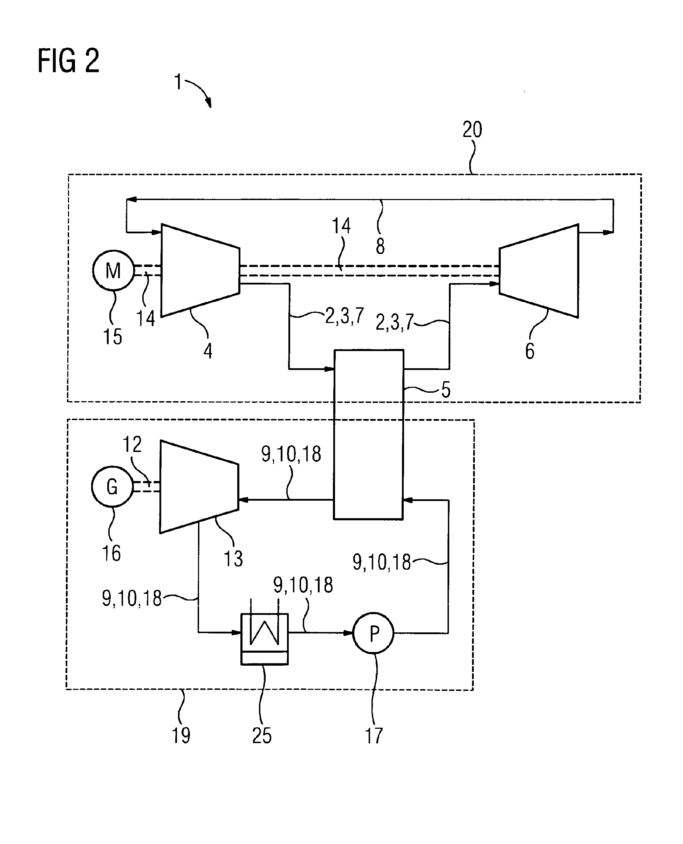

FIG 2 zeigt eine vorteilhafte Weiterentwicklung der erfindungsgemäßen Energiespeichervorrichtung. Zusätzlich zu der in FIG 1 gezeigten Energiespeichervorrichtung ist der Ladekreislauf 2 nun als geschlossener Kreislauf ausgestaltet. Dazu ist eine zweite Leitung 8 für das Arbeitsgas 3 vorgesehen, die den Austritt der Expansionsturbine mit dem Eintritt des Verdichters miteinander verbindet.

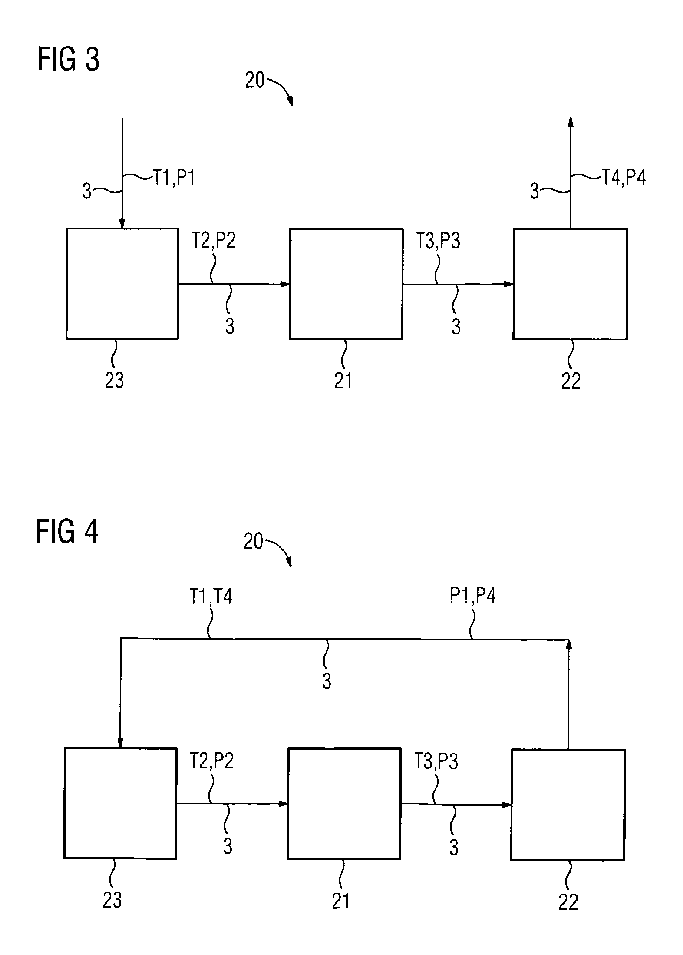

FIG 3 zeigt ein Verfahren zur Speicherung von Energie. Das Verfahren umfasst einen Ladevorgang 20 und einen Endladevorgang 19. Dargestellt ist hier lediglich der Ladevorgang 20.

Der Ladevorgang 20 umfasst einen Verdichterprozess 23, einen Wärmetauscherprozess 21 und einen Expansionsprozess 22. Der Ladevorgang wird hier als offener Kreislauf betrieben.

Dem Verdichterprozess 23 wird ein Arbeitsgas 3, beispielsweise Umgebungsluft, mit einer Temperatur T1 von beispielsweise 20°C und einem Druck P1 von beispielsweise 1 bar zugeführt. In dem Verdichterprozess 23 wird das Arbeitsgas 3 verdichtet. Den Verdichterprozess 23 verlässt das Arbeitsgas 3 mit einem Druck P2 von beispielsweise 550°C und einer Temperatur T2 von beispielsweise 20 bar. Mit diesen thermodynamischen Bedingungen wird das Arbeitsgas 3 dem Wärmetauscherprozess 21 zugeführt, in dem es erfindungsgemäß nur einen Teil seiner Wärme abgibt, und somit nur relativ gering abgekühlt wird. Den Wärmetauscherprozess 21 verlässt das Arbeitsgas 3 mit einem Druck P3 von beispielsweise 15 bar und einer noch relativ hohen Temperatur T3 von beispielsweise 230°C. Der Druck P3 kann dabei vorteilhaft durch die Dimensionierung des Wärmetauscherprozesses 21 eingestellt werden.

Mit diesen Konditionen wird das Arbeitsgas 3 dem Expansionsprozess 22 zugeführt, wo es expandiert wird. Durch die Herabsetzung des Drucks wird das Arbeitsgas 3 auf nahezu Umgebungstemperatur abgekühlt. Den Expansionsprozess 22 verlässt das Arbeitsgas 3 mit einer Temperatur T4 von beispielsweise 20°C und einem Druck P4 von beispielsweise 1 bar. Somit entspricht die Temperatur T1 in etwa der Temperatur T4 und der Druck P1 in etwa dem Druck P4.

FIG 4 zeigt eine Weiterentwicklung des erfindungsgemäßen Verfahrens. Dargestellt ist der Ladevorgang 20 aus FIG 3. Zusätzlich ist jedoch eine das Arbeitsgas 3 rückleitende Verbindung zwischen dem Expansionsprozess 22 und dem Verdichterprozess 23 vorhanden. Dadurch ist der Ladekreislauf 2 für das Arbeitsgas 3 als geschlossener Kreislauf ausgeführt.

Aufgrund der hohen Temperatur T2 nach dem Verdichterprozess 23 besteht im Wärmespeicherprozess 21 keine Gefahr der Wasserkondensation.

## Patentansprüche

1. Energiespeichervorrichtung (1) zur Speicherung thermischer Energie, mit einem Ladekreislauf (2) für ein Arbeitsgas (3), umfassend einen Verdichter (4), einen Wärmespeicher (5) und eine Expansionsturbine (6), wobei der Verdichter (4) austrittsseitig mit dem Eintritt der Expansionsturbine (6) über eine erste Leistung (7) für das Arbeitsgas (3) verbunden ist, und der Wärmespeicher (5) in die erste Leitung (7) geschaltet ist,
**dadurch gekennzeichnet,**
- **dass** der Verdichter (4) und die Expansionsturbine (6) auf einer gemeinsamen Welle (14) angeordnet sind, und
- **dass** der Wärmetauscher des Wärmespeichers (5) derart ausgelegt ist, dass das in der Expansionsturbine (6) entspannte Arbeitsgas (3) weitgehend den thermodynamischen Zustandsgrößen des Arbeitsgases (3) vor Eintritt in den Verdichter (4) entspricht.

2. Energiespeichervorrichtung (1) nach Anspruch 1, **dadurch gekennzeichnet, dass** eine zweite Leitung (8) für das Arbeitsgas (3) vorgesehen ist, über die der Austritt der Expansionsturbine (6) mit dem Eintritt des Verdichters (4) miteinander verbunden ist, so dass ein geschlossener Ladekreislauf gebildet ist.

3. Energiespeichervorrichtung (1) nach einem der Ansprüche 1 bis 2, **dadurch gekennzeichnet, dass** der Wärmespeicher (5) zudem in einen Endladekreislauf (9) für ein zweites Arbeitsgas (10) geschaltet ist, wobei der Wärmetauscher (5) in dem Endladekreislauf (9) mit einer Dampfturbine (12) verbunden ist.

4. Energiespeichervorrichtung (1) nach einem der Ansprüche 1 bis 3, **gekennzeichnet durch** die Anwendung in einem Kraftwerk welches mit erneuerbaren Energien betrieben wird, zur Speicherung von saisonaler elektrischer Überschussenergie.

5. Energiespeichervorrichtung (1) nach einem der Ansprüche 1 bis 4, **dadurch gekennzeichnet, dass** das Speichermaterial des Wärmespeichers (5) poröse Materialien, Sand, Kies, Gestein, Beton, Wasser oder Salzlösung sind.

6. Verfahren zur Speicherung thermischer Energie, bei dem in einem Ladeprozess (20)
a) in einem Verdichterprozess (23) ein Arbeitsgas (3) von einer Temperatur T1 und einem Druck P1 auf einen Druck P2 mit einer Temperatur T2 verdichtet wird,
b) in einem Wärmetauscherprozess (21) Wärme auf einen Wärmespeicher (5) übertragen wird, wodurch Temperatur und Druck des Arbeitsgases (3) auf eine Temperatur T3 und einen Druck P3 verringert werden, und
c) in einem Expansionsprozess (22) das Arbeitsgas (3) auf einen Druck P4 mit einer Temperatur T4 entspannt wird,
wobei Temperatur T3 und Druck P3 so eingestellt werden, dass die Temperatur T4 und der Druck P4 nach dem Expansionsprozess (22) weitgehend der Temperatur T1 und dem Druck P1 vor dem Verdichterprozess entsprechen.

7. Verfahren nach Anspruch 6, bei dem die Temperatur T3 und der Druck P3 durch die Dimensionierung des Wärmetauscherprozesses (21) eingestellt werden.

8. Verfahren nach einem der Ansprüche 6 bis 7, bei dem die im Expansionsprozess (22) freiwerdende Expansionsenergie auf den Verdichterprozess (23) übertragen wird.

9. Verfahren nach einem der Ansprüche 6 bis 8, wobei der Verdichter mit elektrisch saisonal anfallende Überschussenergie eines Kraftwerks mit erneuerbaren Energien angetrieben wird.

10. Verfahren nach einem der Ansprüche 6 bis 9, wobei als Speichermaterial für den Wärmespeicher des Wärmetauscherprozesses (21) poröse Materialien, Sand, Kies, Gestein, Beton, Wasser oder Salzlösung verwendet werden.
